# EUROPÄISCHE PATENTSCHRIFT

(11) **EP 1 121 535 B1**
(45) Veröffentlichungstag und Bekanntmachung des Hinweises auf die Patenterteilung: **09.03.2005**
(21) Anmeldenummer: 00965743.8
(22) Anmeldetag: 09.08.2000
(51) Int. Cl.: F16C 11/06, F16C 33/10

(54) **KUGELGELENK**
BALL-AND-SOCKET JOINT
ARTICULATION A ROTULE

(30) Priorität: 13.08.1999 DE 19937655
(43) Veröffentlichungstag der Anmeldung: 08.08.2001
(73) Patentinhaber: ZF Lemförder Metallwaren AG, 49441 Lemförde (DE)
(72) Erfinder: GRÄBER, Jürgen, D-32351 Stemwede-Dielingen (DE); STEHR, Werner, D-72160 Horb-Ahldorf (DE)
(86) Internationale Anmeldenummer: PCT/DE2000/002713
(87) Internationale Veröffentlichungsnummer: WO 2001/013001

(56) Entgegenhaltungen:
- DE-A- 3 920 683
- DE-A- 3 930 825
- DE-A- 4 419 954
- FR-A- 2 170 608
- US-A- 2 932 534
- US-A- 3 647 249
- US-A- 4 105 267
- US-A- 4 904 106
- PATENT ABSTRACTS OF JAPAN vol. 012, no. 149 (M-694), 10. Mai 1988 (1988-05-10) & JP 62 270815 A (MUSASHI SEIMITSU IND CO LTD), 25. November 1987 (1987-11-25)

## Beschreibung

Die Erfindung betrifft ein Kugelgelenk vorzugsweise für Kraftfahrzeuge, bei dem eine an einem Gelenkzapfen ausgebildete Gelenkkugel in einer Lagerschale aus Kunststoff beweglich gelagert ist, wobei die Lagerschale an ihrer inneren, der Gelenkkugel zugewandten Mantelfläche Schmiermittel aufnehmende Ausnehmungen aufweist. Die Lagerschale ist in einem diese aufnehmenden, die Lagerschale mit seiner Innenwandung eng umschließenden Gehäuse umgeben.

Derartige Kugelgelenke der gattungsgemäßen Art sind im Maschinenbau - und hier insbesondere in der Kraftfahrzeugindustrie - weit verbreitet. Durch die in der Gelenkschale ausgebildeten Ausnehmungen, in denen vor dem Zusammenbau ein Schmiermittelreservoir angelegt ist, sollen die Reibungsverluste zwischen den relativ zueinander beweglichen Teilen, d. h. der Gelenkkugel und der Lagerschale, vermindert werden, indem im Einbauzustand der Kugelgelenke das Schmiermittel aus den Ausnehmungen in den Zwischenraum zwischen Gelenkkugel und Lagerschale hineinfließt. Obwohl sich die beschriebenen Kugelgelenke in der Praxis bewährt haben, besteht ein wesentliches Problem darin, daß sich nach längeren Ruhezeiten der Gelenke die Schmierfilmdicke zwischen Gelenkkugel und Lagerschale auf Werte unterhalb der Oberflächenrauheit der zueinander beweglichen Oberflächen herabsetzt. Aus dieser Tatsache ergibt sich, daß je glatter ein Kugelzapfen ist, desto geringer der Schmierfilm im Lagerspalt wird. Die geringe Schmierfilmdicke läßt die Lösekräfte für eine Bewegung der Gelenkkugel relativ zur Lagerschale sehr stark ansteigen.

Begünstigt wird der beschriebene Nachteil bestehender Kugelgelenke zusätzlich dadurch, daß der Abstand der einzelnen Fettaschen bildenden Ausnehmungen üblicherweise im Bereich zwischen 3 - 5 mm und darüber liegt, was zusätzlich dazu beiträgt, daß im Falle einer Bewegung innerhalb des Kugelgelenkes unter Umständen nach Tagen bis Wochen ein augenblickliches schnelles Zurückfließen des Schmiermittels in den engen, aber sehr langen Schmierspalt erschwert wird. Das über den längeren Ruhezeitraum von Tagen oder Wochen stattfindende Wegfließen des Schmiermittels aus dem Schmierspalt kann somit nicht ausgeglichen werden, so daß ein Adhäsions- und Saugefekt entsteht, der die Lösekräfte (Losbrechmoment) bis auf ein Vielfaches derjenigen Kräfte bei kontinuierlicher Bewegung ansteigen läßt.

Die gattungsgemässe FR-A-2170608 offenbart ein Kugelgelenk, insbesondere für Kraftfahrzeuge, mit einer an einem Gelenkzapfen ausgebildeten Gelenkkugel, die in einer Lagerschale aus Kunststoff beweglich gelagert ist, wobei die Lagerschale an ihrer inneren, der Gelenkkugel zugewandten Mantelfläche Schmiermittel aufnehmende Ausnehmungen aufweist sowie einem die Lagerschale aufnehmenden, diese mit seiner Innenwandung eng umschließenden Gehäuse. Nachteilig an der Ausführung der FR-A-2170608 ist, dass die Schmiermittel aufnehmenden Ausnehmungen lediglich für die statische Belastung einen hinreichenden Schmierfilm bereitstellen. Sofern aber bei einer dynamischen Belastung Kraftspitzen auftreten, kann nicht genügend Schmiermittel in dem Bereich der Kontaktflächen zur Verfügung gestellt werden, so dass die Reibmomente nachteilig ansteigen.

Die DE-A-3930825 zeigt ein Kugelgelenk, insbesondere für ein Kraftfahrzeug, welches eine in einer Lagerschale aus Kunststoff aufgenommene und an einem Gelenkzapfen ausgebildeten Gelenkkugel aufweist, wobei an der Oberfläche der Gelenkkugel eine Vielzahl von kreisförmigen Vertiefungen zur Aufnahme eines Schmiermittels ausgebildet sind. Nachteilig an dieser Gestaltung ist im übrigen das aufwendige Einbringen der Vertiefungen in die metallische Gelenkkugel gegenüber der Fertigung von Vertiefungen in Kunststoffteilen.

Die US-A-4904106 offenbart ein Kugelgelenk, insbesondere für ein Kraftfahrzeug, welches eine in einer Lagerschale aus Kunststoffund an einem Gelenkzapfen ausgebildeten Gelenkkugel aufweist, wobei die Lagerschale an ihrer inneren, der Gelenkkugel zugewandten Mantelfläche Schmiermittel aufnehmende Ausnehmungen aufweist, sowie einem die Lagerschale aufnehmenden, diese mit seiner Innenwandung eng umschließenden Gehäuse. Die Schmiermittel aufnehmenden Ausnehmungen sind in nachteiliger Weise allerdings weit beabstandet, so dass die Ausnehmungen lediglich einen Schmiermittelvorrat aufnehmen, allerdings kein, an die Belastungen angepasst, zusätzliches Schmiermittel zwischen Gelenkkugel und Lagerschale bereitstellen kann.

Die DE-A-4419954 stellt ein weiteres Kugelgelenk, vorzugsweise für Kraftfahrzeuge, mit einer an einem Gelenkzapfen ausgebildeten Gelenkkugel dar, die in einer Lagerschale aus Kunststoff beweglich gelagert ist. Die Lagerschale ist hierbei zweiteilig ausgebildet, wobei beide Lagerschalenteile Schmiermittel aufnehmende Ausnehmungen aufweisen. Beide Lagerschalenteile sind für unterschiedliche Belastungsrichtungen des Kugelgelenkes vorgesehen, dementsprechend ist auch die Ausrichtung der Ausnehmungen hieran angepasst. Nachteilig ist hierbei insbesondere, dass mehrere Lagerschalenteile vorzusehen sind. Eine für alle Bewegungs- und Belastungsrichtungen gleichmäßige Schmiermittelversorgung an beliebiger Stelle der Lagerschale und damit gleichmäßig niedrige Reib- und Drehmomentwerte kann diese Kugelgelenkanordnung nicht bereitstellen.

Die US-A-3647249 zeigt eine Lagerschale aus Kunststoff für ein Kugelgelenk, in der die an einem Gelenkzapfen ausgebildete Gelenkkugel beweglich gelagert ist. Die Lagerschale weist hierzu großflächige Schmiermittel aufnehmende Ausnehmungen auf. Besonders nachteilig an dieser Ausführung ist insbesondere, dass die Kontaktfläche zwischen Lagerschale und Gelenkkugel stark reduziert und ungleichmäßig über die Lagerfläche verteilt ist. Die Ausnehmungen stellen dabei lediglich einen Schmiermittelvorrat zur Verfügung, welcher aber nicht, angepasst an unterschiedliche Belastungen, gezielt zur Reduzierung von Reibmomenten bzw. zur Erzielung gleichmäßiger Kipp- und Drehmomente verwendbar ist.

Des Weiteren offenbart die US-A-2932534 ein Kugelgelenk mit einer Gelenkkugel, die in einer Lagerschale aus Kunststoff beweglich gelagert ist. Die Lagerschale weist auch hier Schmiermittel aufnehmende Ausnehmungen, sowie einem die Lagerschale aufnehmenden, diese mit seiner Innenwandung eng umschließenden mehrteiligem Gehäuse auf. Die Schmiermittel aufnehmenden Ausnehmungen sind in nachteiliger Weise auch hier weit beabstandet und bezogen auf das Breiten-/Tiefenverhältnis, flach ausgebildet. Damit stellen die Ausnehmungen auch hier lediglich einen Schmiermittelvorrat zur Verfügung, welcher aber nicht, angepasst an die unterschiedlichen Belastungen, gezielt zur Reduzierung von Reibmomenten bzw. zur Erzielung gleichmäßiger Kipp- und Drehmomente verwendbar ist.

Aufgabe der vorliegenden Erfindung ist es daher, ein Kugelgelenk der gattungsgemäßen Art mit verbesserter Gelenkschmierung zu schaffen, das insbesondere gleichmäßige Kipp- und Drehmomente aufweist und bei dem somit die Lebensdauer heraufgesetzt ist.

Diese Aufgabe wird erfindungsgemäß dadurch gelöst, daß die das Schmiermittel aufnehmenden Ausnehmungen Nuten sind, die einen Strukturverband mit schräg zur Mittellängsachse des Kugelgelenkes verlaufenden Nutabschnitten bilden, wobei die lateralen Abstände zwischen zwei benachbarten Nutabschnitten 0,5 bis dreimal so groß sind wie die Nutbreite b, also gering gehalten sind, und die Tiefe t der Nutabschnitte gleich oder größer ist als die Breite b der Nutabschnitte.

Ebenso hat es sich als eine vorteilhafte Lösung der eingangs genannten Aufgabenstellung erwiesen, daß die Ausnehmungen in der Lagerschale Nuten sind, die einen Strukturverband mit schräg zur Mittellängsachse des Kugelgelenkes verlaufenden Nutabschnitten bilden, wobei die lateralen Abstände zwischen zwei benachbarten Nutabschnitten 0,5 bis dreimal so groß sind wie die Nutbreite b, also gering gehalten sind, und die Tiefe t der Nutabschnitte gleich oder größer ist, als ein Drittel der Breite b der Nutabschnitte.

Darüber hinaus kann eine Lösung darin bestehen, daß die Ausnehmungen in der Lagerschale mikroskopisch kleine Vertiefungen sind und die Anzahl der mikroskopischen Vertiefungen auf der Innenmantelfläche der Lagerschale zwischen 100 und 100.000 je cm² beträgt.

Durch diese neuartigen Gestaltungen wird beispielsweise bewirkt, daß sich die bei einer Laständerung zwischen den Nutabschnitten befindlichen Segmente der elastischen Lagerschale verformen, und somit das Volumen der Ausnehmungen verändert bzw. verkleinert wird. Durch die Verkleinerung wird das in den Ausnehmungen befindliche Schmiermittel aus diesen herausgedrückt und steht somit als Schmierstoff in unmittelbarer Nähe der belasteten Bereiche zur Verfügung. Durch den dadurch gebildeten hydrostatischen Druck verteilt sich der aus den Ausnehmungen herausgedrückte Schmierstoff und erniedrigt somit die Reibung im Spalt zwischen Gelenkkugel und Lagerschale. Darüber hinaus besteht der Vorteil, daß die als Strukturverband an der Mantelfläche der Lagerschale vorhandenen Nuten oder Vertiefungen die Gesamtstruktur der Lagerschale beweglicher werden lassen, so daß beispielsweise durch Unrundheiten hervorgerufene lokale Spitzenbelastungen der Lagerschale besser verteilt und somit verringert werden können. Somit läßt sich durch die neuartige Gestaltung der Lagerschale des Kugelgelenkes die effektive Belastung von letzterem unter Umständen sogar steigern.

Werden darüber hinaus die Ausnehmungen mikroskopisch klein ausgeführt, lassen sich auch dadurch erstaunliche Verbesserungen in den Schmiereigenschaften derartiger Kugelgelenke erreichen. Der erzielte Effekt besteht einerseits darin, daß die von der Gelenkkugeloberfläche verschlossenen Ausnehmungen infolge ihrer Fettbefüllung einen statischen Druck aufbauen, der eine permanente Tragwirkung des Kugelzapfens auch bei nicht bewegtem Gelenk bewirkt. Bei Bewegungen des Kugelzapfens wird dann der zuvor beschriebene hydrodynamische Effekt genutzt, um die Reibung zwischen Gelenkkugel und Lagerschale herabzusetzen.

Ein weiterer wesentlicher Aspekt für die Wirksamkeit des neuartigen Kugelgelenkes ist die Tatsache, daß die Tiefe t der Nutabschnitte gleich oder größer ist als deren Breite b beziehungsweise als ein Drittel der Breite b. So läßt sich ein Pumpeffekt innerhalb der Nutabschnitte durch die Verformung der angrenzenden Bereiche der Lagerschale erzielen.

Durch die beschriebenen erfindungsgemäßen Merkmale lassen sich die Lösemomente an die Bewegungsmomente des Kugelgelenkes angleichen, so daß kein anfängliches Losbrechmoment und die möglicherweise damit verbundenen Knackgeräusche nach kurzen oder langen Stillstandszeiten entsteht. Durch die gleichmäßigeren Momente bei unterschiedlichen Bewegungsformen des Kugelgelenkes reduziert sich darüber hinaus die Neigung derartiger Gelenke zu Ruckgleiten der zueinander beweglichen Teile und somit auch die Geräuschbildung.

Die definierte Oberfläche der Lagerschale aus Kunststoff trägt darüber hinaus dazu bei, daß die Streubreite innerhalb der Produktion derartiger Kugelgelenke reduziert wird.

Spezielle weitere Ausgestaltungen des Gegenstandes der Erfindung ergeben sich in Zusammenschau mit der erfindungsgemäßen Lehre des Hauptanspruches und der nebengeordneten Ansprüche aus den Merkmalen der Unteransprüche.

Bei Kugelgelenken, deren Gelenkkugel in unterschiedlichen Richtungen relativ zur Lagerschale ausgelenkt wird, lassen sich die beschriebenen Pumpeffekte der Nuten beispielsweise dadurch herbeiführen, daß die aneinander grenzenden Nutabschnitte in ihrer Längenausdehnung im wesentlichen rechtwinklig zueinander angeordnet sind.

Eine weitere Möglichkeit, den Pumpeffekt zu steigern, ergibt sich dadurch, daß der Strukturverband der Nutabschnitte in einzelne Strukturfelder aufgegliedert ist, in denen die Nutabschnitte parallel zueinander angeordnet sind, wohingegen die Nutabschnitte nebeneinander liegender unterschiedlicher Strukturfelder rechtwinklig zueinander liegen.

Im folgenden werden unterschiedliche Ausführungsbeispiele des Gegenstandes der Erfindung anhand der beigefügten Zeichnungen näher erläutert.

Es zeigen:
- Figur 1: ein erfindungsgemäßes Kugelgelenk in Schnittdarstellung
- Figur 2: eine Schnittdarstellung eines Ausführungsbeispieles der Lagerschale des Kugelgelenkes aus Figur 1
- Figur 2a: eine vergrößerte Darstellung der Nuten der Lagerschale aus Figur 2,
- Figur 3: eine Schnittdarstellung eines zweiten Ausführungsbeispiels einer Lagerschale des Kugelgelenkes aus Figur 1,

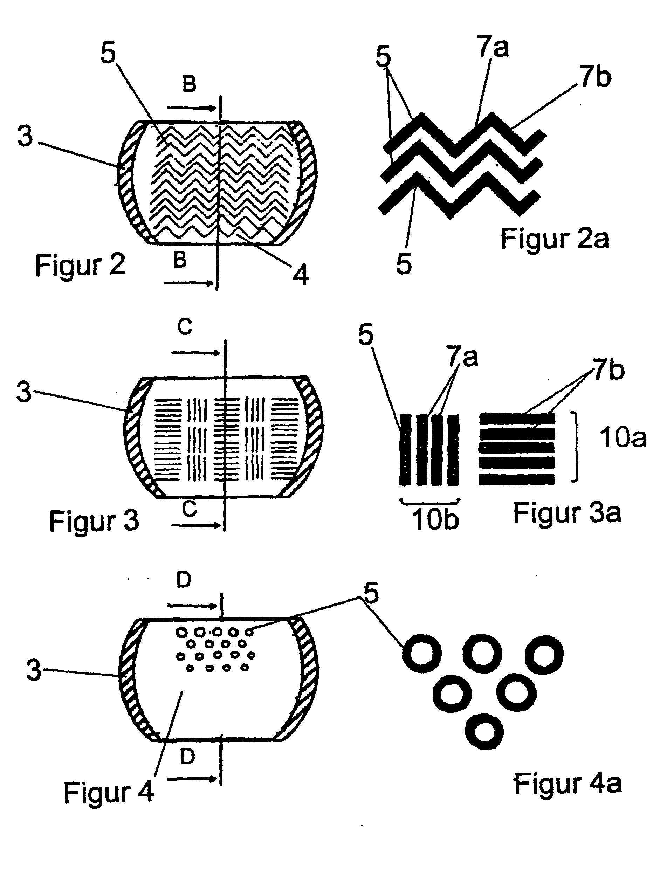

- Figur 3 a: eine vergrößerte Darstellung der Nuten der Lagerschale aus Figur 3,

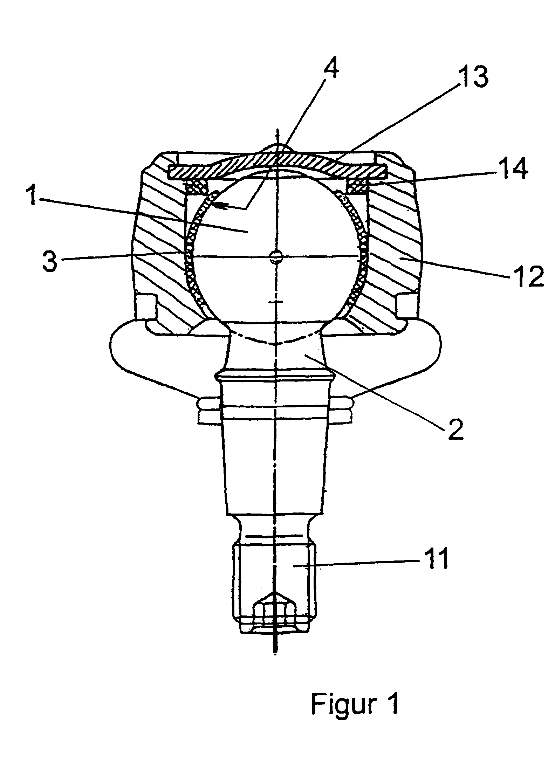

- Figur 4: eine Schnittdarstellung eines dritten Ausführungsbeispiels einer Lagerschale des Kugelgelenkes aus Figur 1
- Figur 4a: eine vergrößerte Darstellung der Nuten der Lagerschale aus Figur 4,

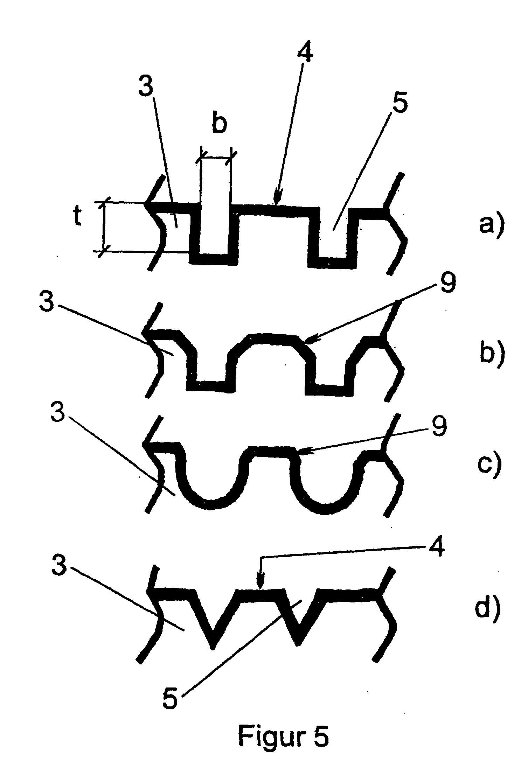

- Figur 5a-d: unterschiedliche Ausgestaltungen der Nuten entsprechend den Schnitten B-B, C-C und D-D aus den Figuren 2 bis 4 und

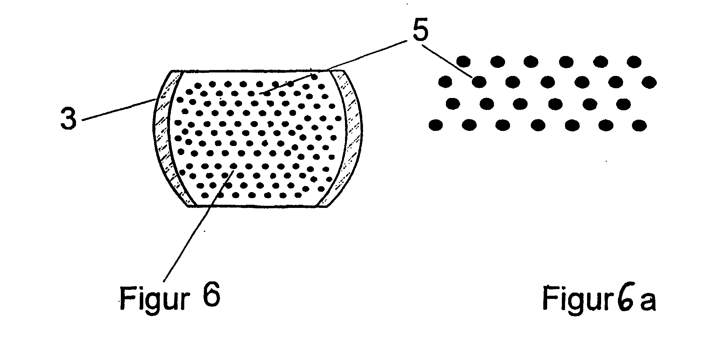

- Figur 6-6a: auszugsweise eine Darstellung einer Lagerschale im Schnitt mit mikroskopisch kleinen Vertiefungen.

Bei dem in der Figur 1 dargestellten Ausführungsbeispiel eines erfindungsgemäßen Kugelgelenkes ist die Gelenkkugel 1 an dem einen Ende eines Gelenkzapfens 2 ausgebildet, dessen anderes Ende einen Gewindezapfen 11 zur Befestigung aufweist. Die Gelenkkugel 1 ist mit einer Lagerschale 3 in ein Gehäuse 12 eingesetzt, welches an der offenen Seite durch einen Deckel 13 verschlossen ist. Ein elastisches Polster 14 oder andere federnde Mittel sorgen für einen spielfreien Sitz der Gelenkkugel 1 in der Lagerschale 3. Der Gelenkzapfen 2 ist somit in gewissen Grenzen gegenüber der Lagerschale 3 um drei Achsen frei beweglich. An der Innenseite der Lagerschale befindet sich eine innere Mantelfläche 4. Der Spalt zwischen der Mantelfläche 4 und äußeren Oberfläche der Gelenkkugel 1 muß zur Reduzierung von Reibmomenten jederzeit mit einem dünnen Film aus Schmiermittel versehen sein.

Um die Schmierfilmschicht jederzeit in ausreichendem Maße zu gewährleisten, weist die Lagerschale 3, wie dies aus Figur 2 und 3 ersichtlich wird, Nuten 5 auf, die über die gesamte innere Mantelfläche 4 der Lagerschale 3 verteilt einen Strukturverband bilden, wobei die Nuten einzelne Nutabschnitte 7 aufweisen, deren Anordnung und Abmaße erfindungsgemäß die ausreichende Schmierfilmdicke innerhalb des Spaltes zwischen Gelenkkugel 1 und Lagerschale 3 gewährleisten.

Im Ausführungsbeispiel der Figuren 2 und 2a sind die einzelnen Nuten in rechtwinklig zueinander liegende Nutabschnitte 7a bzw. 7b aufgeteilt. Die Nutabschnitte 7a und 7b sind miteinander verbunden und die aus den Nutabschnitten gebildeten Nuten 5 sind ähnlich einem Reifenprofil in parallel nebeneinander angeordneten Reihen ausgebildet. Der Verlauf der Nutabschnitte 7a und 7b ist dabei so gewählt, daß bei allen Schwenkbewegungen der Gelenkkugel 1 relativ zur Lagerschale 3 eine Querbewegung der Gelenkkugeloberfläche zu einzelnen Nutabschnitten 7a bzw. 7b stattfindet. Die Relativbewegung führt aufgrund der schmalen Zwischenräume zwischen den Nuten 5 zu einer Verformung der Zwischenräume. Diese Verformung wird durch die Tatsache begünstigt, daß die Nuttiefe t der Nuten 5 in diesem Fall größer ist als ein Drittel von deren Breite b.

Das Verhältnis zwischen Nutbreite b und Nuttiefe t ist exemplarisch den Schnittdarstellungen der Figuren 5a bis d zu entnehmen. Durch das Verhältnis b zu t und den aus der Figur 2a deutlich werdenden geringen Abstand der Nuten 5 zueinander ist gewährleistet, daß eine Querbewegung der Gelenkkugel 1 über die offene Oberseite der Nuten 5 hinweg zu einer Verformung des Zwischenraumes der Nuten führt. Diese Verformung des Zwischenraumes verkleinert den Querschnitt der Nuten, die Verkleinerung drückt das in den Nuten enthaltene Schmiermittel in gewissem Maß nach oben heraus gegen die Gelenkkugeloberfläche. Durch die Bewegung der Gelenkkugel 1 wird das aus den Nuten 5 nach oben herausgedrückte Schmiermittel in den Spalt zwischen Lagerschale 3 und Gelenkzapfen 1 hineingezogen.

In der Figur 3 ist ein weiteres Ausführungsbeispiel eines Strukturverbandes von Nuten 5 an der inneren Mantelfläche 4 der Lagerschale 3 gezeigt. Aus der Figur 3 und insbesondere aus der Figur 3a wird deutlich, daß bei dieser Ausgestaltung der Lagerschale 3 die Nuten 5 in einzelne voneinander getrennte Nutabschnitte 7a und 7b aufgeteilt sind, wobei die Abschnitte 7a nebeneinander liegend parallel ausgerichtet ein Strukturfeld 10a bilden und die Nutabschnitte 7b ein weiteres Strukturfeld 10b herstellen, wobei die Längsausdehnung der Nutabschnitte 7a und 7b orthogonal zueinander verläuft. Durch die Anordnung der Nutabschnitte 7a bzw. 7b ist in Analogie zur Figur 2 und Figur 2a ebenfalls für jede Bewegung der Gelenkkugel 1 relativ zur Lagerschale 3 eine Querbewegung der Gelenkkugeloberfläche über die Öffnung eines Nutabschnittes 7a oder 7b gewährleistet. Der Abstand zwischen den Nutabschnitten sowie die Breite b und Tiefe t der Nuten 5 entspricht denjenigen des in den Figuren 2 und 2a beschriebenen Ausführungsbeispiels, so daß auch für diese Ausgestaltungsvariante aufgrund der speziellen Anordnung und Abmessungen der Nuten 5 immer eine ausreichende Schmierfilmdicke in dem Spalt zwischen Gelenkkugel 1 und Lagerschale 3 gewährleistet ist.

In den Figuren 4 und 4a ist als weitere Variante als Nutform eine in sich geschlossene Ringform gewählt worden.

Neben den Querschnittsabmessungen der Nuten 5 wird aus den Figuren 5 a bis d deutlich, daß die Querschnittsform der Nuten 5 variieren kann, solange das Abmessungsverhältnis gewahrt ist. Darüber hinaus kann die obere an die innere Mantelfläche 4 angrenzende Längsseite der Nutenabschnitte 7a bzw. 7b einen abgeschrägten Kantenbereich 9 aufweisen, wie dies den Figuren 5 b bzw. 5 c zu entnehmen ist. Dabei ist die Oberfläche des abgeschrägten Kantenbereiches in einem Winkel von im wesentlichen weniger als 15° zur inneren Mantelfläche der Lagerschale geneigt.

Aus den Figuren 6 und 6a geht eine erfindungsgemäße Lagerschale 3 im Schnitt hervor, deren Ausnehmungen mikroskopisch kleine Vertiefungen 5 sind. Die Anzahl dieser mikroskopischen Vertiefungen 5 auf der Innenmantelfläche 4 der Lagerschale 3 bewegt sich zwischen 100 und 100.000 je cm², sodaß sich eine strukturierte Innenmantelfläche 4 der Lagerschale 3 ergibt, die mit bloßem Auge betrachtet ein poröses bzw. diffuses Aussehen hat. Zwischen den Vertiefungen 5 sind jeweils Stegbereiche ausgebildet. Die in den Figuren 6 und 6a gezeigten Vertiefungen 5 weisen eine sphärische Oberfläche auf, wobei die Kantenbereiche 9 jeweils unter Bildung von Abflachungen in die Stegbereiche übergehen.

Die Herstellung der oben beschriebenen Lagerschalen kann durch photooptische Verfahren zur Erzeugung des Strukturverbandes der Nuten und Übertragung durch Ätz- oder andere Abtragungsverfahren ermöglicht werden.

## Patentansprüche

1. Kugelgelenk vorzugsweise für Kraftfahrzeuge, mit einer an einem Gelenkzapfen (2) ausgebildeten Gelenkkugel (1), die in einer Lagerschale (3) aus Kunststoff beweglich gelagert ist, wobei die Lagerschale (3) an ihrer inneren, der Gelenkkugel (1) zugewandten Mantelfläche (4) Schmiermittel aufnehmende Ausnehmungen aufweist sowie einem die Lagerschale (3) aufnehmenden, diese mit seiner Innenwandung eng umschließenden Gehäuse (12),
**dadurch gekennzeichnet, daß**
die Ausnehmungen Nuten (5) sind, die in der Lagerschale (3) einen Strukturverband mit schräg zur Mittellängsachse (6) des Kugelgelenkes verlaufenden Nutabschnitten (7a, 7b) bilden, wobei die lateralen Abstände zwischen zwei benachbarten Nutabschnitten (7a, 7b) 0,5 bis dreimal so groß sind wie die Nutbreite b und die Tiefe t der Nutabschnitte (7a, 7b) gleich oder größer als die Breite b der Nutabschnitte (7a, 7b) ist.

2. Kugelgelenk vorzugsweise für Kraftfahrzeuge, mit einer an einem Gelenkzapfen (2) ausgebildeten Gelenkkugel (1), die in einer Lagerschale (3) aus Kunststoff beweglich gelagert ist, wobei die Lagerschale (3) an ihrer inneren, der Gelenkkugel (1) zugewandten Mantelfläche (4) Schmiermittel aufnehmende Ausnehmungen aufweist sowie einem die Lagerschale (3) aufnehmenden, diese mit seiner Innenwandung eng umschließenden Gehäuse (12,
**dadurch gekennzeichnet, daß**
die Ausnehmungen Nuten (5) sind, die in der Lagerschale (3) einen Strukturverband mit schräg zur Mittellängsachse (6) des Kugelgelenkes verlaufenden Nutabschnitten (7a, 7b) bilden, wobei die lateralen Abstände zwischen zwei benachbarten Nutabschnitten (7a, b) 0,5 bis dreimal so groß sind wie die Nutbreite b und die Tiefe t der Nutabschnitte (7a, 7b) gleich oder größer als ein Drittel der Breite b der Nutabschnitte (7a, 7b) ist.

3. Kugelgelenk vorzugsweise für Kraftfahrzeuge, mit einer an einem Gelenkzapfen (2) ausgebildeten Gelenkkugel (1), die in einer Lagerschale (3) aus Kunststoffbeweglich gelagert ist, wobei die Lagerschale (3) an ihrer inneren, der Gelenkkugel (1) zugewandten Mantelfläche (4) Schmiermittel aufnehmende Ausnehmungen aufweist sowie einem die Lagerschale (3) aufnehmenden, diese mit seiner Innenwandung eng umschließenden Gehäuse (12),
**dadurch gekennzeichnet, daß**
die Ausnehmungen in der Lagerschale (3) mikroskopisch kleine Vertiefungen (5) sind und die Anzahl der mikroskopischen Vertiefungen auf der Innenmantelfläche der Lagerschale (3) zwischen 100 und 100.000 je cm² beträgt.

4. Kugelgelenk nach Anspruch 1 oder 2,
**dadurch gekennzeichnet, daß**
die aneinander grenzenden Nutabschnitte (7a, 7b) in ihrer Längenausdehnung im wesentlichen rechtwinklig zueinander angeordnet sind.

5. Kugelgelenk nach einem der Ansprüche 1, 2 oder 4,
**dadurch gekennzeichnet, daß**
die obere an die innere Mantelfläche (4) angrenzende Längsseite der Nutabschnitte (7a, 7b) einen abgeschrägten Kantenbereich (9) aufweisen.

6. Kugelgelenk nach Anspruch 5,
**dadurch gekennzeichnet, daß**
die Oberfläche des abgeschrägten Kantenbereiches (9) einen Winkel von im wesentlichen weniger als 15° zur inneren Mantelfläche (4) der Lagerschale (3) bildet.

7. Kugelgelenk nach einem der Ansprüche 1, 2 oder 4 bis 6,
**dadurch gekennzeichnet, daß**
die Nutabschnitte (7a, 7b) voneinander getrennt sind, so daß sich einzelne Strukturfelder (10a, 10b) an der Mantelfläche (4) ergeben.

8. Kugelgelenk nach Anspruch 1 oder 2,
**dadurch gekennzeichnet, daß**
die einzelnen Nutabschnitte zu geschlossenen Ringnuten zusammengefaßt sind

9. Kugelgelenk nach Anspruch 3 ,
**dadurch gekennzeichnet, daß**
zwischen den Vertiefungen (5) Stegbereiche ausgebildet sind.

10. Kugelgelenk nach Anspruch 9,
**dadurch gekennzeichnet, daß**
die Vertiefungen (5) eine sphärische Oberfläche aufweisen und in ihrem Übergangsbereich zu den Stegbereichen Abflachungen aufweisen.

## Claims

1. Ball-and-socket joint, preferably for motor vehicles, with a joint ball (1) which is formed at a joint pin (2) and is mounted in a mobile manner in a plastics bearing shell (3), wherein the bearing shell (3) comprises recesses holding lubricant at its inner cylindrical surface (4) which faces the joint ball (1), as well as a housing (12) which holds the bearing shell (3) and closely encloses it with its inner wall,
**characterised in that**
the recesses are grooves (5) which constitute a structural unit with groove portions (7a, 7b) extending obliquely to the centre longitudinal axis (6) of the ball-and-socket joint in the bearing shell (3), wherein the lateral spacings between two adjacent groove portions (7a, 7b) are 0.5 to three times as great as the groove width b, and the depth t of the groove portions (7a, 7b) is equal to or greater than the width b of the groove portions (7a, 7b).

2. Ball-and-socket joint, preferably for motor vehicles, with a joint ball (1) which is formed at a joint pin (2) and is mounted in a mobile manner in a plastics bearing shell (3), wherein the bearing shell (3) comprises recesses holding lubricant at its inner cylindrical surface (4) which faces the joint ball (1), as well as a housing (12) which holds the bearing shell (3) and closely encloses it with its inner wall,
**characterised in that**
the recesses are grooves (5) which constitute a structural unit with groove portions (7a, 7b) extending obliquely to the centre longitudinal axis (6) of the ball-and-socket joint in the bearing shell (3), wherein the lateral spacings between two adjacent groove portions (7a, 7b) are 0.5 to three times as great as the groove width b, and the depth t of the groove portions (7a, 7b) is equal to or greater than one third of the width b of the groove portions (7a, 7b).

3. Ball-and-socket joint, preferably for motor vehicles, with a joint ball (1) which is formed at a joint pin (2) and is mounted in a mobile manner in a plastics bearing shell (3), wherein the bearing shell (3) comprises recesses holding lubricant at its inner cylindrical surface (4) which faces the joint ball (1), as well as a housing (12) which holds the bearing shell (3) and closely encloses it with its inner wall,
**characterised in that**
the recesses in the bearing shell (3) are microscopically small depressions (5), and the number of microscopic depressions at the inner cylindrical surface of the bearing shell (3) is between 100 and 100,000 per cm².

4. Ball-and-socket joint according to Claim 1 or 2,
**characterised in that**
the adjacent groove portions (7a, 7b) are disposed substantially at a right angle to one another in their linear extent.

5. Ball-and-socket joint according.to-any one of Claims 1, 2 or 4,
**characterised in that**
the upper longitudinal side of the groove portions (7a, 7b) which is adjacent to the inner cylindrical surface (4) comprises a bevelled edge region (9).

6. Ball-and-socket joint according to Claim 5,
**characterised in that**
the surface of the bevelled edge region (9) forms an angle of substantially less than 15° to the inner cylindrical surface (4) of the bearing shell (3).

7. Ball-and-socket joint according to any one of Claims 1, 2 or 4 to 6,
**characterised in that**
the groove portions (7a, 7b) are separate from one another, so that individual structural fields (10a, 10b) are produced at the cylindrical surface (4).

8. Ball-and-socket joint according to Claim 1 or 2,
**characterised in that**
the individual groove portions are combined to form closed annular grooves.

9. Ball-and-socket joint according to Claim 3,
**characterised in that**
web regions are formed between the depressions (5).

10. Ball-and-socket joint according to Claim 9,
**characterised in that**
the depressions (5) have a spherical surface, and flat parts in their transition region to the web regions.

## Revendications

1. Articulation à rotule de préférence pour véhicules automobiles, comportant une rotule d'articulation (1) réalisée sur un pivot (2), laquelle rotule est montée mobile dans un coussinet (3) en matière plastique, le coussinet (3) présentant, sur sa surface d'enveloppe (4) intérieure tournée vers la rotule d'articulation (1), des évidements recevant un lubrifiant, ainsi qu'un boîtier (12) recevant le coussinet (3) et enfermant étroitement celui-ci par sa paroi intérieure,
**caractérisée en ce que**
les évidements sont des rainures (5) qui forment, dans le coussinet (3), un assemblage structurel avec des tronçons de rainure (7a, 7b) s'étendant obliquement par rapport à l'axe médian longitudinal (6) de l'articulation à rotule, les écartements latéraux entre deux tronçons de rainure (7a, 7b) voisins étant de 0,5 à 3 fois plus grands que la largeur (b) des rainures et **en ce que** la profondeur (t) des tronçons de rainure (7a, 7b) est égale ou supérieure à la largeur (b) des tronçons de rainure (7a, 7b).

2. Articulation à rotule de préférence pour véhicules automobiles, comportant une rotule d'articulation (1) réalisée sur un pivot (2), laquelle rotule est montée mobile dans un coussinet (3) en matière plastique, le coussinet (3) présentant, sur sa surface d'enveloppe (4) intérieure tournée vers la rotule d'articulation (1), des évidements recevant un lubrifiant, ainsi qu'un boîtier (12) recevant le coussinet (3) et enfermant étroitement celui-ci par sa paroi intérieure,
**caractérisée en ce que**
les évidements sont des rainures (5) qui forment, dans le coussinet (3), un assemblage structurel avec des tronçons de rainure (7a, 7b) s'étendant obliquement par rapport à l'axe médian longitudinal (6) de l'articulation à rotule, les écartements latéraux entre deux tronçons de rainure (7a, 7b) voisins étant de 0,5 à 3 fois plus grands que la largeur (b) des rainures et **en ce que** la profondeur (t) des tronçons de rainure (7a, 7b) est égale ou supérieure à un tiers de la largeur (b) des tronçons de rainure (7a, 7b).

3. Articulation à rotule de préférence pour véhicules automobiles, comportant une rotule d'articulation (1) réalisée sur un pivot (2), laquelle rotule est montée mobile dans un coussinet (3) en matière plastique, le coussinet (3) présentant, sur sa surface d'enveloppe (4) intérieure tournée vers la rotule d'articulation (1), des évidements recevant un lubrifiant, ainsi qu'un boîtier (12) recevant le coussinet (3) et enfermant étroitement celui-ci par sa paroi intérieure,
**caractérisée en ce que**
les évidements du coussinet (3) sont des renfoncements (5) microscopiques et le nombre de renfoncements microscopiques sur la surface d'enveloppe intérieure du coussinet (3) est compris entre 100 et 100 000/cm².

4. Articulation à rotule selon la revendication 1 ou 2,
**caractérisée en ce que**
les tronçons de rainure (7a, 7b) adjacents les uns aux autres sont disposés, dans leur étendue longitudinale, sensiblement à angle droit les uns par rapport aux autres.

5. Articulation à rotule selon l'une des revendications 1, 2 ou 4,
**caractérisée en ce que**
le côté longitudinal supérieur, adjacent à la surface d'enveloppe intérieure (4), des tronçons de rainure (7a, 7b), présente une zone de bordure (9) biseautée.

6. Articulation à rotule selon la revendication 5,
**caractérisée en ce que**
la surface de la zone de bordure (9) biseautée forme un angle sensiblement inférieur à 15° par rapport à la surface d'enveloppe intérieure (4) du coussinet (3).

7. Articulation à rotule selon l'une des revendications 1, 2 ou 4 à 6,
**caractérisée en ce que**
les tronçons de rainure (7a, 7b) sont séparés les uns des autres, de sorte qu'il en résulte des zones de structure (10a, 10b) individuelles sur la surface d'enveloppe (4).

8. Articulation à rotule selon la revendication 1 ou 2,
**caractérisée en ce que**
les différents tronçons de rainure sont réunis en rainures annulaires fermées.

9. Articulation à rotule selon la revendication 3,
**caractérisée en ce que**
des zones de cloison sont réalisées entre les renfoncements (5).

10. Articulation à rotule selon la revendication 9,
**caractérisée en ce que**
les renfoncements (5) présentent une surface sphérique et des méplats dans leur zone de transition avec les zones de cloison.
